# EUROPÄISCHE PATENTSCHRIFT

(11) **EP 0 500 065 B1**
(45) Veröffentlichungstag und Bekanntmachung des Hinweises auf die Patenterteilung: **27.11.1996**
(21) Anmeldenummer: 92102735.5
(22) Anmeldetag: 19.02.1992
(51) Int. Cl.: B65G 1/04

(54) **Lager für auf Paletten transportierbares Lagergut**
Storage for goods transportable on pallets
Entrepôt pour marchandises transportables sur palettas

(30) Priorität: 21.02.1991 DE 4105351
(43) Veröffentlichungstag der Anmeldung: 26.08.1992
(73) Patentinhaber: MIELE & CIE. GMBH & CO., D-33325 Gütersloh (DE)
(72) Erfinder: Hellkuhl, Ludger, W-4830 Gütersloh (DE); Deppe, Johannes, W-4830 Gütersloh (DE)

(56) Entgegenhaltungen:
- EP-A- 0 405 471
- AT-B- 367 713
- US-A- 3 738 506
- US-A- 4 389 157

## Beschreibung

Die Erfindung betrifft ein Lager für auf Paletten transportierbares Lagergut welches vorzugsweise als Durchschub- und/oder Einschublager ausgebildet ist wobei mehrere regalartig übereinander angeordnete Lagerebenen eine Transportgasse aufweisen, in denen ein Transportfahrzeug für die Paletten verfahrbar ist, wobei entlang der Transportgasse Lagerzonen mit Lagerkanälen und Speicherbahnen angeordnet sind, wobei in den Lagerkanälen die Paletten einen Palettenzug bildend, miteinander gekoppelt, verfahrbar sind, wobei die Lagerebenen miteinander über ein Hubwerk verbunden sind und wobei Mittel zum Handhaben der Paletten als bewegliche Palettenhandhabungsvorrichtung ausgebildet sind, die Mittel zum Andocken an entsprechenden Gegenstücken eines Lagerkanals aufweist.

Aus der US 37 38 506 ist ein Durchschub- und/oder Einschublager bekannt, bei dem mehrere regalartig übereinander angeordnete Lagerebenen von einem in der unteren Lagerebene in einer Transportgasse fahrenden Regalförderzeug aus mit Lagerut bestückt werden. Das Regalförderzeug ist mit einem Hubwerk ausgebildet, in dessen Hubkabine ein Satellit angeordnet ist. Der Satellit ist über einen teleskopierbaren Schienenrahmen an der Hubkabine in der Lage, aus dem Bereich des Regalförderzeuges heraus in den Lagerkanal einzufahren. Um das Herausfahren des Satellit zu ermöglichen, ist der Schienenrahmen mit Klinken versehen, die sich in der jeweiligen Lagerebene einklinken, damit die Schienen des Schienenrahmens mit den Regalschienen verbunden sind.

Zur Handhabung der Rollpaletten ist auf dem Satellit eine vertikalbewegliche Plattform angeordnet. Die Rollpaletten werden vom Satellit auf die Plattform gezogen und dann zum Regalförderzeug transportiert. Der Satellit fährt mit dem Lagergut über den Schienenrahmen in die Hubkabine des Regalförderzeuges ein. Das Regalförderzeug übernimmt den Transport des Lagergutes zum nächsten Bestimmungsort.

Ein besonderer Nachteil dieser Ausführung liegt in der langen Stillstandzeit des Regalförderzeuges bei einem Ein- bzw. Auslagervorgang. Das Regalförderzeug (Rfz) muß vor dem Lagerkanal warten, bis der Satellit den Ein- bzw. Auslagervorgang in der jeweiligen Lagerebene bendet hat.

Ein weiterer Nachteil liegt darin, daß der Satellit über einen zusätzlichen Antrieb und eine eigene oder eine vom Rfz gesteuerte Positioniereinrichtung verfügen muß, um exakte Koppelvorgänge mit den Paletten zu ermöglichen.

Aus der EP 462 125 B1 ist ein Durchschub- und/oder Einschublager bekannt, bei dem mehrere übereinander angeordnete Lagerebenen jeweils über eine Transportgasse verfügen und in der vertikalen Richtung über Hubwerke verbunden sind, denen in der jeweiligen Lagerebene ein der Transportgasse zugeordneter Übergabeplatz nachgeschaltet ist. Auf diese Weise soll eine Trennung von Vertikal- und Horizontaltransport erfolgen, um ein schnelles Ein- und Auslagem des Lagergutes zu ermöglichen.

Ein Nachteil dieser Ausführung liegt darin, daß Hubwerk und Transportfahrzeug noch keine geeigneten Mittel für schnelles und exaktes Handhaben des Lagergutes auf den Rollpaletten aufweisen.

Das vorgegebene Lager soll einerseits über eine hohe Speicherdichte verfügen und andererseits einen hohen Lagerumschlag ermöglichen.
Zur Erfüllung dieser Erfordernisse ist bereits aus der EP 0 126 431 B1 ein Durchschub-/Einschublager der eingangs genannten Art bekannt.
Bei dem bekannten Durchschub-/Einschublager erfolgt das An- bzw. Entkoppeln der Paletten durch eine Versetzbewegung des Transportfahrzeugs quer zu den Paletten.
Die Probleme dieses Systems liegen darin, daß es zu Fahrfehlern und nicht korrekten An- bzw. Entkoppelvorgängen kommen kann, da das Transportfahrzeug nicht positionsgenau vor einem Lagerkanal angehalten wird und daher auch keine definierte Versetzbewegung für den Koppelvorgang ausführen kann. Ähnliche Probleme Tauchen beim Betrieb von Hubwerken innerhalb eines solchen Lagers auf.

Der Erfindung liegt die Aufgabe zugrunde, ein Lager mit hoher Speicherdichte und hohem Lagerumschlag zu ermöglichen und Transportfahrzeuge sowie auch die Hubwerke mit Einrichtungen zu versehen, die exakte Koppelvorgänge gewährleisten.

Diese Aufgabe wird erfindungsgemäß durch die Kombination der Merkmale des Anspruchs 1 gelöst.

Weitere vorteilhafte Ausgestaltungen der Erfindung ergeben sich aus den nachfolgenden Ansprüchen.

Die mit der Erfindung erzielbaren Vorteile liegen insbesondere in der Trennung von Horizontal- und Vertikaltransport durch den Einsatz von Transportfahrzeugen und separaten Hubwerken und darin, daß die Palettenhandhabungsvorrichtung für das An- bzw. Entkoppeln der Rollpaletten am Regal andockt und dabei in einem die Palettenhandhabungsvorrichtung gegenüber dem Transportfahrzeug bzw. dem Hubwerk hebenden Vorgang aus einer zum Transportfahrzeug bzw. Hubwerk lagefixierten Nullstellung (Transport-Stellung) in eine toleranzausgleichende Andockstellung (Palettenhandhabungs-Stellung) führbar ist. Beim Andocken erfolgt ein Ausgleich von Fahrtoleranzen von Hubwerk und Transportfahrzeug in vertikaler und horizontaler Richtung.
Weitere Vorteile liegen darin, daß durch die Mittel zum positionsgenauen Andocken vor dem Lagerkanal bzw. der Speicherbahn beim Handling einer Palette eine direkte Krafteinleitung in die Kanalschiene erfolgt, wenn z. B. die Palette mit Hilfe der Palettenhandhabungsvorrichtung aus dem Lagerkanal herausgezogen wird. Im Vergleich zu Systemen, bei denen ein Transportfahrzeug frei vor einem Lagerkanal stehend eine Palette aus dem Kanal herauszieht, treten bei dem erfindungsgemäßen System, bedingt durch das angedockte Transportfahrzeug, relativ geringe Momente am Lagergerüst und am Transportfahrzeug auf. Durch die direkte Krafteinleitung über die Mittel zum Ankoppeln in die Kanalschiene sind insgesamt weniger Anforderungen an die Stabilität des Lagergerüstes und des Transportfahrzeuges zu stellen.
Die Mittel zum Andocken von Hubwerk bzw. Transportfahrzeug sind an der Palettenhandhabungsvorrichtung vorgesehen. Die Palettenhandhabungsvorrichtung ist beweglich auf dem Chassis des Transportfahrzeugs bzw. des Hubwerkes gelagert. Durch die bewegliche Lagerung der Palettenhandhabungsvorrichtung mit den daran angeordneten Mitteln zum Andocken erfolgt ein Toleranzausgleich beim Andocken. Durch diesen Toleranzausgleich kann das Transportfahrzeug auch mit geringen Abweichungen von der Sollposition vor dem Lagerkanal anhalten. Trotz geringer Abweichungen von der Sollposition des Transportfahrzeuges bleibt ein exakter Koppelvorgang der Paletten gewährleistet.

Ein Ausführungsbeispiel der Erfindung ist in der Zeichnung dargestellt und wird im folgenden näher erläutert.

Es zeigen:
- Figur 1: eine Lagerebene (1) mit Lagerzonen (4) und Kommissionierzonen (5),
- Figur 2: das erfindungsgemäße Lager mit Transportgasse (2) und Hubwerksschacht (12) ausschnittsweise in der Seitenansicht im Schnitt,
- Figur 3: das Transportfahrzeug (3) schematisch im Schnitt in Fahrtrichtung,
- Figur 4: die Draufsicht auf die Paletten (7) mit Koppelelementen (13),
- Figur 5a-d: das Transportfahrzeug (3) schematisch im Schnitt quer zur Fahrtrichtung und den Handhabungsvorgang mit einer Palette (7),
- Figur 6: das Hubwerk (9) ausschnittsweise im Schnitt quer zur Speicherbahn (10),
- Figur 7: das Hubwerk (9) vor der Speicherbahn (10) im Schnitt,
- Figur 8: den Übergabeplatz (11) mit Transportfahrzeug (3) und Hubwerk (9).

In den Figuren bezeichnen x, y und z die Fahrtrichtungen des Transport-Fahrzeuges (3), der Rollpalette (7) bzw. des Hubwerks (9).

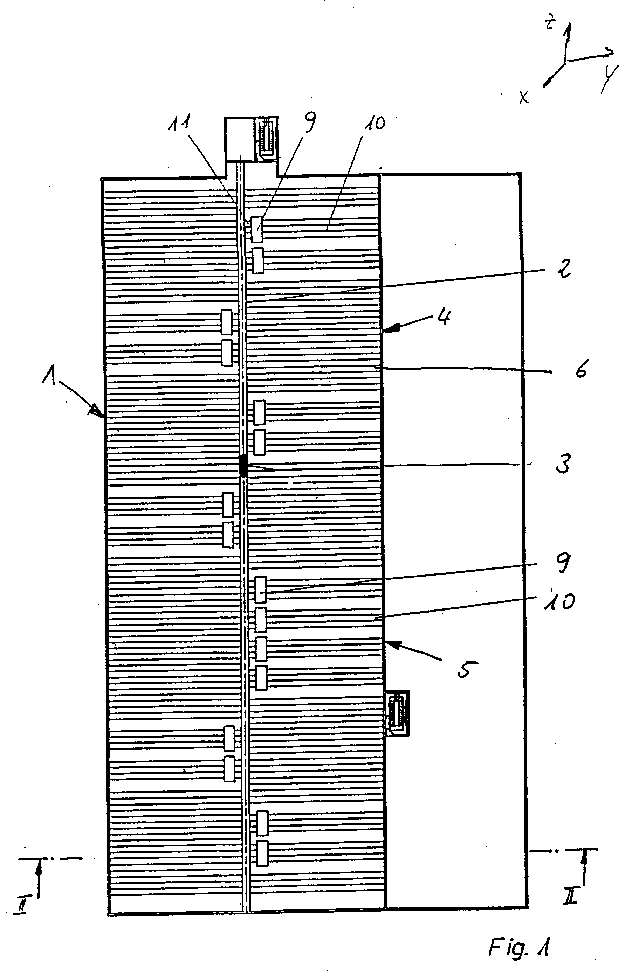

Figur 1 zeigt eine Lagerebene (1) in der Draufsicht mit der Transportgasse (2), in der ein Transportfahrzeug (3) verfahrbar ist. Entlang der Transportgasse (2) sind Lagerzonen (4) und Kommissionierzonen (5) angeordnet. Die Lagerzonen (4) weisen Lagerkanäle (6) auf, die ausgehend von der Transportgasse (2) durch das Transportfahrzeug (3) mit Paletten (7) beschickt werden. In den Lagerzonen (4) wird das Lagergut (8) für einen längeren Zeitraum gelagert. Die Kommissionierzonen (5) der übereinander angeordneten Lagerebenen (1) sind miteinander über mindestens ein Hubwerk (9) verbunden. Dem Hubwerk (9) ist in jeder Lagerzone (4) mindestens eine Speicherbahn (10) und ein Übergabeplatz (11) zugeordnet. Der Übergabeplatz (11) ist zwischen Transportgasse (2) und Hubwerk (9) angeordnet und stellt eine Übergabestation für das Lagergut (8) vom Transportfahrzeug (3) zum Hubwerk (9) dar. Dem Hubwerk (9) sind entsprechend der Anzahl der zugeordneten Übergabeplätze (11) eine oder mehrere Speicherbahnen (10) nachgeschaltet.
In den Kommissionierzonen (5) kann unterschiedliches Lagergut (8) kurzfristig je nach Ladeauftrag für ein außerhalb der Lagerebenen (1) bereitzustellendes Transportfahrzeug (LKW) zu einer Ladeeinheit zusammengestellt werden. Es ist auch möglich, hier das Lagergut (8) je nach Lagergutart für ein geordnetes Einlagern in die Lagerzonen (4) vorzusortieren.

Die Transportfahrzeuge (3) in den Transportgassen (2) entnehmen dazu aus den Lagerkanälen (6) Paletten (7) mit Lagergut (8) und transportieren diese zu den Übergabeplätzen (11) der Hubwerke (9). Mittels Hubwerk (9) können die Paletten (7) dann zu einer Speicherbahn (10) einer Kommissionierzone (5) in einer anderen Lagerebene (1) transportiert oder in der gleichen Ebene in die Speicherbahn (10) übergeben werden.

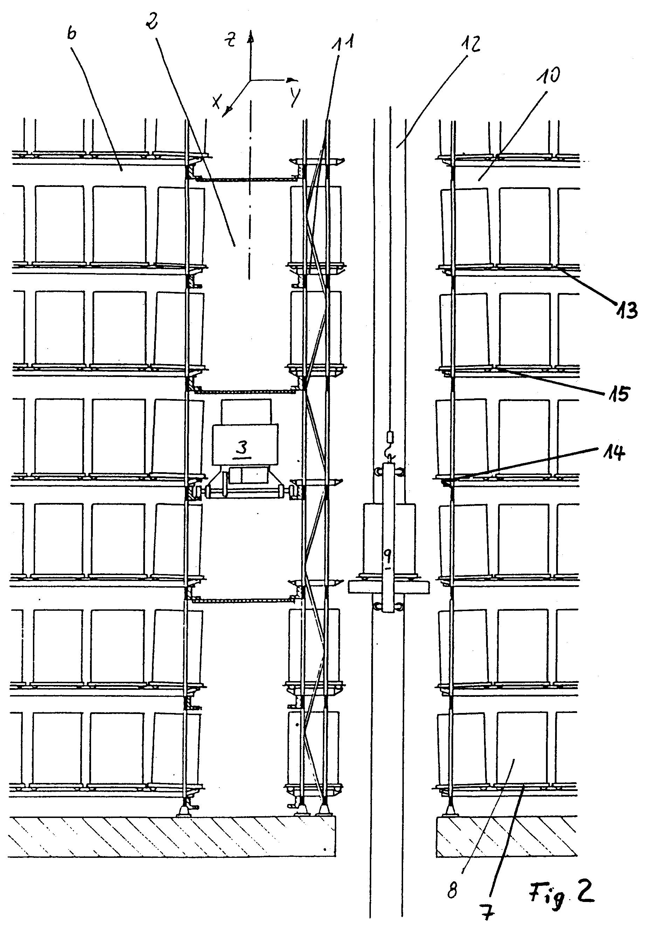

In der Figur 2 ist das Lager ausschnittsweise in der Seitenansicht im Schnitt nach der in Figur 1 angegebenen Schnittlinie gezeichnet. Dabei ist der Bereich mit der Transportgasse (2) für das Transportfahrzeug (3) und der Bereich mit dem Hubwerksschacht (12) für das Hubwerk (9) dargestellt. Das Lager weist eine oder mehrere übereinander angeordnete Lagerebenen (1) auf. In den Lagerkanälen (6) und Speicherbahnen (10) sind Paletten (7) mit Lagergut (8) schienengeführt verfahrbar. Die Paletten (7) sind über Koppelelemente (13) miteinander gekoppelt und bilden einen Palettenzug. Die Paletten können z. B. als Rollpaletten ausgebildet sein.

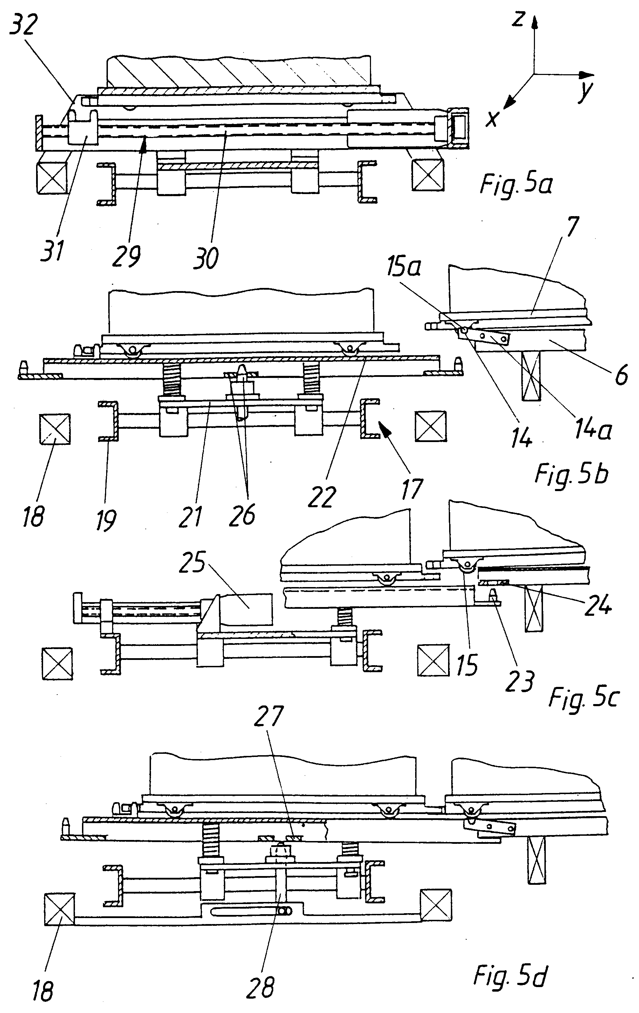

Die horizontal ausgerichteten Lagerkanäle (6) und Speicherbahnen (10) weisen am Kopfende eine Gangsicherung (14) auf, in die die jeweils erste Palette (7) eines Palettenzuges einrastet oder durch Reibschluß gehalten wird. Die Gangsicherung (14) ist in Fig. 5b dargestellt. Am Regal ist ein Raststück (14a) angeordnet, in das eine Achsverlängerung (15a) der Rolle (15) eingreift. In der eingerasteten bzw. reibschlüssigen Stellung lagert die Palette (7) waagerecht oder in leichter Schräglage. Die vorderen Rollen (15) einer Rollpalette hängen vor dem Schienenkopf des Lagerkanals (6) in der Schwebe.

Der Übergabeplatz (11) ist ebenfalls mit Gangsicherungen (16) ausgebildet. Das Transportfahrzeug (3) ist in der Transportgasse (2) schienengeführt verfahrbar. Die Transportgasse (2) weist Fahrschienen, Stromschienen sowie einen Laufsteg für Wartungsarbeiten auf. Das Transportfahrzeug (3) und die Transportgasse (2) sind mit einer Einrichtung zur Wegerfassung für des Transportfahrzeug (3) ausgebildet.

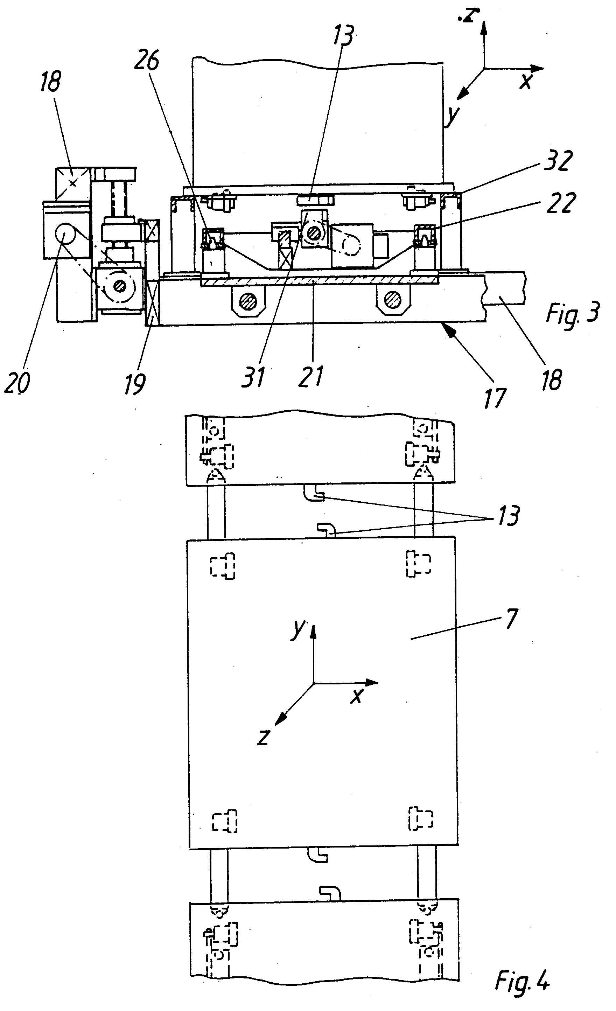

Figur 3 zeigt das Transportfahrzeug (3) mit der Palettenhandhabungsvorrichtung (17) ausschnittsweise im Schnitt. Das Transportfahrzeug (3) ist mit einer oder mehreren Palettenhandhabungsvorrichtungen (17) ausgebildet, die auf dem Chassis (18) beweglich gelagert sind.

Die Palettenhandhabungsvorrichtung (17) weist eine Hubvorrichtung z. B. einen Hubrahmen (19) auf, der vertikalbeweglich (z-Richtung) auf dem Chassis (18) des Transportfahrzeugs (3) gelagert ist. Der Hubrahmen (19) kann z. B. über einen Hubspindelantrieb (20) angehoben bzw. abgesenkt werden. Auf dem Hubrahmen (19) ist ein Schlitten (21) horizontalbeweglich (y-Richtung) geführt angeordnet. Auf dem Schlitten (21) ist der Palettentisch (22) schwimmend gelagert.

Figur 4 zeigt eine Draufsicht auf die Paletten (7) und ihre Anordnung auf den Schienen des Palettentisches (22). Die Koppelelemente (13) an den Paletten (7) sind hakenförmig ausgebildet. Durch den Koppelvorgang, welcher im folgenden noch genauer beschrieben wird, werden die Paletten (7) zu einem Palettenzug miteinander gekoppelt.

Figur 5a bis 5d zeigt des Ein- bzw. Auslagern einer Palette (7) aus einem Lagerkanal (6). Dazu fährt das Transportfahrzeug (3) zu der angegebene Position in der Transportgasse (2) und positioniert sich vor der Stirnseite des Lagerkanals (6) indem es über Mittel (23) zum Andocken, die mit entsprechenden Gegenstücken (24) am Lagerkanal (6) zusammenwirken, in der gewünschten Position andockt. Als Mittel (23) zum Andocken kann z. B. am Palettentisch (22) ein Haken angeordnet sein. Das entsprechende Gegenstück (24) am Lager bildet ein Querbolzen in der Regalschiene des Lagerkanals (6) oder umgekehrt.
Die Zeichnung zeigt einen Bolzen am Palettentisch (22), der in eine Führung an der Regalschiene des Lagerkanals (6) eingreift.

Das Andocken erfolgt in der Art, daß das Transportfahrzeug (3) vor die entsprechende Position des Lagerkanals (6) in der Transportgasse (2) fährt. Der Schlitten (21) wird zusammen mit dem schwimmend auf ihm gelagerten Palettentisch (22) mittels Spindeltrieb (25) aus dem Bereich des Transportfahrzeugs (3) herausgefahren so daß der Bolzen unter der Führung positioniert ist (siehe Figur 5c). Über den Hubspindelantrieb (20) der Hubvorrichtung wird der gesamte Hubrahmen (19) der Palettenhandhabungsvorrichtung (17) angehoben. Bedingt durch die schwimmende Lagerung des Palettentisches auf dem Schlitten (21) erfolgt ein Toleranzausgleich, wenn das Transportfahrzeug (3) nicht in der exakten Sollposition vor dem Lagerkanal (6) angehalten wurde oder des Regal Ungenauigkeiten aufweist. Der Bolzen wirkt beim Anheben des Hubrahmens (19) wie ein Sucher und positioniert den Palettentisch (22) in der für den Koppelvorgang der Paletten (7) erforderlichen Sollposition. Der Palettentisch (22) führt, bedingt durch die schwimmende Lagerung auf dem Schlitten (21), eine leichte Versetzbewegung gegenüber dem Hubrahmen (19) aus. Mit dem Ankoppeln werden alle Maßdifferenzen zwischen Transportfahrzeug und Regel ausgeglichen.

Der Palettentisch (22) ist auf dem Schlitten (21) schwimmend gelagert aber auch über Fixierelemente (26) in einer Mittelstellung zum Chassis fixierbar. Beim Fahrbetrieb des Transportfahrzeugs (3) befindet sich der Palettentisch (22) und die gesamte Palettenhandhabungsvorrichtung (17) auf dem Chassis (18) des Transportfahrzeugs (3) in einer Mittelstellung.

Beim Anheben des Hubrahmens (19) wird der Palettentisch (22) entriegelt. Dazu weist der Palettentisch (22) auf seiner Unterseite eine Riegelfelle (27) auf, in die ein am Chassis (18) in y-Richtung bewegbarer Riegel (28) eingreift.
Durch das Anheben über den Hubrahmen (19) der Hubvorrichtung bewegt sich die Riegelfalle (27) aus dem Eingriffsbereich des Riegels (28). Der Palettentisch (22) ist beweglich gelagert und kann nach Entriegelung toleranzausgleichend in die exakte Übergabeposition für die Paletten (7) geführt werden.

Beim Anheben des Hubrahmens (19) kommen Bolzen und Führung zum Eingriff und die Palettenhandhabungsvorrichtung (17) hebt die vor der Regalschiene frei schwebenden Rollen (15) der Palette an, so daß diese aus der Gangsicherung (14) ausgehoben werden. Beim Einlagern einer Palette (7) erfolgt außerdem, etwas nacheilend zum Andockvorgang, das Ankoppeln der Palette (7) im Lagerkanal (6) mit der auf dem Palettentisch (22) befindlichen Palette (7) durch die Hubbewegung. Der Palettenzug wird mittels einer in Figur 5a dargestellten Hakelmaschine (29), welche einen an einer Zugvorrichtung z. B. einer Spindel (30) angeordneten Mitnehmer (31) für die Paletten (7) aufweist, in den Lagerkanal (6) eingeschoben. Durch Absenken des Hubrahmens (19) wird der Zug von dem Mitnehmer (31) entkoppelt. Die erste Palette (7) im Lagerkanal (6) fällt in die Gangsicherung (14) und die Rollen (15) hängen in der Schwebe vor der Regalschiene.

Beim Auslagern fährt der Mitnehmer (31) in eine Position, in der er durch Anheben des Hubrahmens (19) an einer Palette (7) im Lagerkanal (6) ankoppeln kann. Nach dem Ankoppeln fährt der Mitnehmer (31) in die Ausgangsstellung und zieht dadurch die Palette (7) auf den Palettentisch (22). Durch Absenken des Hubrahmens (19) wird die Palette (7) auf einem Absetzbügel (32) des Chassis (18) abgesetzt. Der Mitnehmer (31) kann in dieser Stellung die Palette (7) unterfahren, so daß er das Koppelelement (13) der Palette (7) auf der anderen Seite ergreifen kann und die Palette (7) in einen anderen Legerkanal (6) auf der gegenüberliegenden Seite oder auf einen Übergabeplatz (11) zum Hubwerk (9) vor einer Speicherbahn (10) einschieben kann.

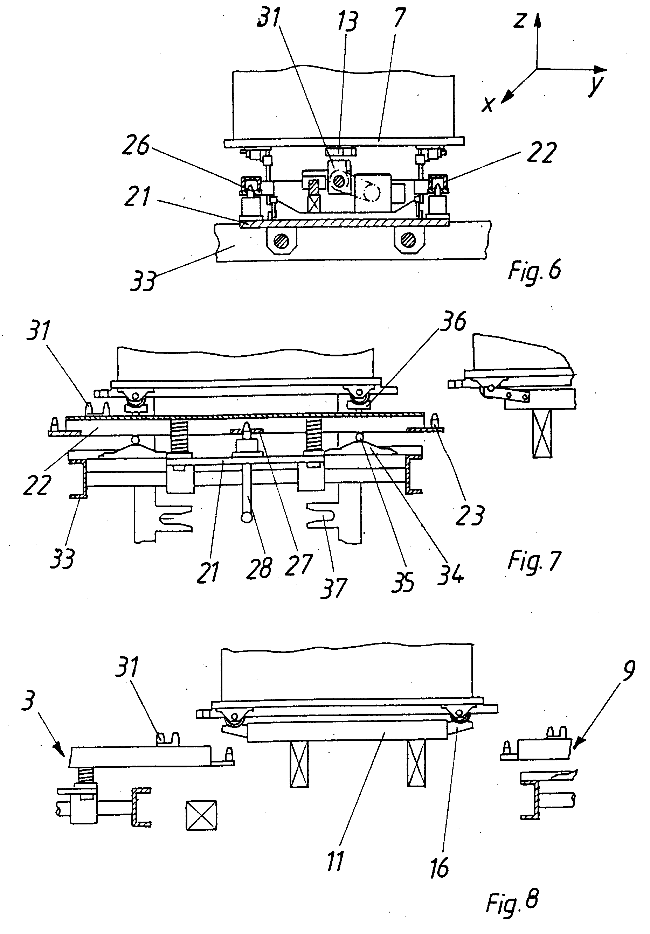

Figur 6 zeigt des Hubwerk (9) ausschnittsweise im Schnitt. Das Hubwerk (9) weist einen Tragrahmen (33) auf, auf dem ebenfalls ein Schlitten (21) horizontalbeweglich geführt (x-Richtung) angeordnet ist. Auf dem Schlitten (21) ist ein Palettentisch (22) schwimmend gelagert. Im Gegensatz zu dem Palettentisch (22) des Transportfahrzeugs (3) weist der Palettentisch (22) des Hubwerkes (9) keine Einrichtung zum Anheben der Paletten (7) auf. Des Anheben der Paletten (7) erfolgt durch die Schlittenbewegung über ein Kurvengetriebe. Wie in Figur 7 gezeigt, weist des Kurvengetriebe eine an dem Tragrahmen (33) angeordnete Kurvenscheibe (34) auf, die mit einer Rolle (35), welche am Palettentisch (22) geführt angeordnet ist, zusammenwirkt. Die Rolle (35) trägt außerdem eine Absetzschale (36) für den Rollenspurkranz der Palette (7). Wird der Palettentisch (22) mittels Schlittenbewegung aus dem Bereich des Hubwerkes (9) zum Andocken an der Speicherbahn (10) herausgefahren, rollt die Rolle (35) auf der Kurvenscheibe (34) ab, so daß die Palette (7) auf den Schienen des Palettentisches (22) abgesetzt wird. Bei der umgekehrten Bewegung wird die Palette (7) angehoben, so daß der Mitnehmer (31) des Spindeltriebs (25) die Palette (7) unterfahren und des Koppelelement (13) auf der anderen Seite ergreifen kann. Die Paletten (7) werden mittels Mitnehmer (31) auf den Hubwerken (9) in gleicher Weise wie auf dem Transportfahrzeug (3) bewegt. Das Hubwerk (9) dockt ebenfalls vor der Speicherbahn (10) über Mittel (23) zum Andocken positionsgenau an. Dazu wird zunächst ein Arbeitshub, der das Hubwerk (9) in die Position vor der Speicherbahn (10) bringt, gefahren. Danach folgt die Schlittenbewegung, die den Palettentisch (22) aus der Mittelstellung hinaus bewegt. Die Mittel (23) zum Andocken des Palettentisches (22) sind nun unterhalb der Gegenstücke (24) an der Regalschiene positioniert. Jetzt führt das Hubwerk (9) den Koppelhub aus, bei dem die Mittel (23) zum Andocken wie Sucher wirken und den Palettentisch (22) in der erforderlichen Palettenhandhabungs-Stellung für die Paletten (7) positionieren. Dabei wird der Palettentisch (22) ebenfalls aus einer zum Hubwerk (9) lagefixierten Nullstellung in eine toleranzausgleichende , am Regal fixierte, Palettenhandhabungs-Stellung bewegt. Der Palettentisch (22) ist ebenfalls über Fixierelemente (26), in der Art der schon am Transportfahrzeug (3) beschriebenen, fixiert. Beim Andocken wird der Riegel (28) in einer Gabel (37) am Regal gehalten.

Figur 8 zeigt den Übergabeplatz (11) für Paletten (7) vom Transportfahrzeug (3) zum Hubwerk (9). Der Übergebeplatz (11) weist eine Gangsicherung (16) für die Palette (7) auf.

Die Gangsicherung (16) ist als Absetzschale ausgebildet, die ein Herausziehen der Palette (7) zu beiden Seiten ermöglicht.

In dem zuvor beschriebenen Ausführungsbeispiel ist als Hubvorrichtung für das Transportfahrzeug (3) ein mittels Hubspindelantrieb (20) vertikal bewegbarer Hubrahmen (19) vorgesehen. Für das Hubwerk (9) ist als Hubvorrichtung ein Tregrahmen (33) vorgesehen, der mittels einer auf einer Kurvenscheibe (34) abrollenden Führungsrolle (35) vertikal bewegbar ist. Diese Festlegung ist nicht zwingend vorgeschrieben. Beide Konstruktionen der Hubvorrichtung sind sowohl für des Transportfahrzeug (3) als auch für das Hubwerk (9) denkbar.

## Patentansprüche

1. Lager für auf Paletten (7) transportierbares Lagergut (8), welches vorzugsweise als Durchschub- und/oder Einschublager ausgebildet ist wobei
- mehrere regalartig übereinander angeordnete Lagerebenen (1) eine Transportgasse (2) aufweisen, in denen ein Transportfahrzeug (3) für die Paletten (7) verfahrbar ist,
- entlang der Transportgasse (2) Lagerzonen (4) mit Lagerkanälen (6) und Speicherbahnen (10) angeordnet sind,
- in den Lagerkanälen (6) die Paletten (7) einen Palettenzug bildend, miteinander gekoppelt, verfahrbar sind,
- die Lagerebenen (1) über ein Hubwerk (9) miteinander verbunden sind,
- Mittel zum Handhaben der Paletten (7) als bewegliche Palettenhandhabungsvorrichtung (17) ausgebildet sind, die
- Mittel (23) zum Andocken an entsprechenden Gegenstücken (24) eines Lagerkanals (6) aufweist,
dadurch gekennzeichnet,
daß
- jeder Lagerebene (1) eine Transportgasse (2) mit mindestens jeweils einem Transportfahrzeug zugeordnet ist,
- die Lagerebenen (1) über ein separat vom Transportfahrzeug (3) angeordnetes Hubwerk (9) miteinander verbunden sind,
- das Hubwerk (9) mindestens einem der Transportgasse (2) zugewandten Übergabeplatz (11) nachgeschaltet ist,
- das Transportfahrzeug (3) und das Hubwerk (9) mit jeweils mindestens einer beweglich gelagerten Palettenhandhabungsvorrichtung (17) ausgebildet ist, die Mittel (23) zum positionsgenauen Andocken aufweist,
- das Andocken der Palettenhandhabungsvorrichtung (17) in einem die Palettenhandhabungsvorrichtung (17) gegenüber dem Transportfahrzeug bzw. dem Hubwerk hebenden Vorgang passiert, bei dem die Palettenhandhabungsvorrichtung (17) aus einer zu ihrem Chassis (18) lagefixierten Nullstellung (Transport-Stellung) in eine die Fahrtoleranzen von Transportfahrzeug (3) und/oder Hubwerk (9) in vertikaler und horizontaler Richtung ausgleichende, am Lagerkanal (6) bzw. an der Speicherbahn (10) fixierte Andockstellung (Palettenhandhabungs-Stellung) führbar ist.

2. Lager nach Anspruch 1,
dadurch gekennzeichnet,
daß die Palettenhandhabungsvorrichtung (17) des Transportfahrzeugs (3) bzw. des Hubwerkes (9) eine Hubvorrichtung (19) aufweist, die vertikalbeweglich auf dem Chassis (18) gelagert ist, wobei auf der Hubvorrichtung (19) ein Schlitten (21) horizontalbeweglich geführt angeordnet ist, der einen schwimmend gelagerten Palettentisch (22) trägt.

3. Lager nach Anspruch 2,
dadurch gekennzeichnet,
daß die Palettenhandhabungsvorrichtung (17) des Hubwerkes (9) als Hubvorrichtung einen Tragrahmen (33) aufweist, der mittels einer auf einer Kurvenscheibe (34) abrollenden Führungsrolle (35) vertikal beweglich ist, wobei auf dem Tragrahmen (33) ein Schlitten (21) horizontalbeweglich geführt angeordnet ist, der den schwimmend gelagerten Palettentisch (22) trägt.

4. Lager nach Anspruch 2,
dadurch gekennzeichnet,
daß die Palettenhandhabungsvorrichtung (17) des Transportfahrzeugs (3) als Hubvorrichtung einen über Hubspindeltrieb (20) vertikal bewegbaren Nubrahmen (19) aufweist.

## Claims

1. Storage area for storage material (8), which is conveyable on pallets (7), said area preferably being configured as a slide-through and/or slide-in storage area, wherein
- a plurality of storage levels (1), which are disposed above one another in the manner of shelves, have a haulage track (2), in which a haulage vehicle (3) for the pallets (7) is displaceable,
- storage zones (4), provided with storage channels (6) and storage paths (10), are disposed along the haulage track (2),
- the pallets (7) are displaceable in the storage channels (6) so as to form a pallet train when interconnected,
- the storage levels (1) are interconnected via a lifting mechanism (9),
- means for handling the pallets (7) are configured as a displaceable pallet handling device (17), which includes means (23) for docking with corresponding articles (24) of a storage channel (6),
characterised in that
- a haulage track (2), provided with at least one haulage vehicle, is associated with each storage level (1),
- the storage levels (1) are interconnected via a lifting mechanism (9) disposed separately from the haulage vehicle (3),
- the lifting mechanism (9) is connected to the outlet end of at least one delivery location (11) facing the haulage track (2),
- the haulage vehicle (3) and the lifting mechanism (9) are each provided with at least one displaceably mounted pallet handling device (17), which includes means (23) for accurately positioned docking,
- the docking of the pallet handling device (17) occurs in a process which lifts the pallet handling device (17) relative to the haulage vehicle, or respectively the lifting mechanism, wherein the pallet handling device (17) is guidable from a zero position (haulage position), which is positionally fixed relative to its chassis (18), into a docking positon (pallet handling position), which balances-out the travel tolerances of haulage vehicle (3) and/or lifting mechanism (9) in a vertical and horizontal direction and is fixed on the storage channel (6), or respectively on the storage path (10).

2. Storage area according to claim 1, characterised in that the pallet handling device (17) of the haulage vehicle (3), or respectively of the lifting mechanism (9), has a lifting device (19) which is mounted on the chassis (18) in a vertically displaceable manner, a carriage (21) being disposed on the lifting device (19) so as to be guided in a horizontally displaceable manner, and said carriage supporting a detachably mounted pallet table (22).

3. Storage area according to claim 2, characterised in that the pallet handling device (17) of the lifting mechanism (9) has, as the lifting device, a supporting frame (33) which is vertically displaceable by means of a guide roller (35), which travels on a cam plate (34), a carriage (21) being disposed on the supporting frame (33) so as to be guided in a horizontally displaceable manner, and said carriage supporting the detachably mounted pallet table (22).

4. Storage area according to claim 2, characterised in that the pallet handling device (17) of the haulage vehicle (3) has, as the lifting device, a lifting frame (19) which is vertically displaceable via lifting spindle drive (20).

## Revendications

1. Magasin pour marchandises (8) transportables sur palettes (7), qui est de préférence réalisé comme un magasin de passage et/ou d'entrée, dans lequel
- plusieurs niveaux de stockage (1), superposés à la façon des étagères d'un rayonnage, présentent une allée de circulation (2) dans laquelle peut être déplacé un véhicule de transport (3) pour les palettes (7),
- des zones de stockage (4) comportant des canaux de stockage (6) et des voies d'accumulation (10) sont disposées le long de l'allée de circulation (2),
- les palettes (7), attelées entre elles et formant un train de palettes, sont déplaçables dans les canaux de stockage (6),
- les niveaux de stockage (1) sont reliés entre eux par un élévateur (9) et
- des moyens pour manutentionner les palettes (7) sont réalisés comme un dispositif mobile de manutention de palettes (17) qui
- présente des moyens (23) pour le couplage à des dispositifs antagonistes (24) correspondants d'un canal de stockage (6),
caractérisé en ce que
- une allée de circulation (2) avec au moins un véhicule de transport sont coordonnés à chaque niveau de stockage (1),
- les niveaux de stockage (1) sont reliés entre eux par un élévateur (9) agencé séparément du véhicule de transport (3),
- l'élévateur (9) est suivi d'au moins un poste de transfert (11) dirigé vers l'allée de circulation (2),
- le véhicule de transport (3) et l'élévateur (9) sont chacun pourvus d'au moins un dispositif de manutention de palettes (17) monté mobile et pourvu de moyens (23) pour le couplage en position précise,
- le couplage du dispositif de manutention de palettes (17) s'effectue dans une opération au cours de laquelle le dispositif de manutention de palettes (17) est soulevé par rapport au véhicule de transport ou par rapport à l'élévateur et lors de laquelle le dispositif de manutention de palettes (17) peut être amené d'une position zéro (position de transport), dans laquelle la position de ce dispositif est bloquée par rapport à son châssis (18), à une position couplée qui compense les tolérances de déplacement du véhicule de transport (3) et/ou de l'élévateur (9) dans le sens vertical et dans le sens horizontal et dans laquelle ce dispositif est fixé à un canal de stockage (6) ou à une voie d'accumulation (10).

2. Magasin selon la revendication 1, caractérisé en ce que le dispositif de manutention de palettes (17) du véhicule de transport (3) ou de l'élévateur (9) présente un dispositif de levage (19) monté verticalement mobile sur le châssis (18) et sur lequel est disposé un coulisseau (21) mobile et guidé horizontalement et portant une table à palettes (22) montée flottante.

3. Magasin selon la revendication 2, caractérisé en ce que le dispositif de manutention (17) de l'élévateur (9) présente, en tant que dispositif de levage, un cadre porteur (33) déplaçable verticalement au moyen d'un galet de guidage (35) roulant sur un disque formant rampe (33), un coulisseau (21) étant disposé mobile et guidé horizontalement sur le cadre porteur (33), coulisseau qui porte la table à palettes (22) montée flottante.

4. Magasin selon la revendication 2, caractérisé en ce que le dispositif de manutention (17) du véhicule de transport (3) présente, en tant que dispositif de levage, un cadre de levage (19) déplaçable verticalement au moyen d'une commande de levage à broche filetée (20).
